# EUROPÄISCHE PATENTSCHRIFT

(11) **EP 3 509 463 B1**
(45) Veröffentlichungstag und Bekanntmachung des Hinweises auf die Patenterteilung: **26.06.2024**
(21) Anmeldenummer: 17801001.3
(22) Anmeldetag: 14.11.2017
(51) Int. Cl.: A47G 23/03

(54) **MATTE ZUR LÖSBAREN AUFNAHME EINES OBJEKTES**
MAT FOR REMOVABLY RECEIVING AN OBJECT
TAPIS POUR RECEVOIR UN OBJET DE MANIÈRE AMOVIBLE

(30) Priorität: 12.12.2016 AT 511262016
(43) Veröffentlichungstag der Anmeldung: 17.07.2019
(73) Patentinhaber: König, Marcus, 8010 Graz (AT)
(72) Erfinder: König, Marcus, 8010 Graz (AT)
(74) Vertreter: Wirnsberger & Lerchbaum Patentanwälte OG
(86) Internationale Anmeldenummer: PCT/AT2017/060302
(87) Internationale Veröffentlichungsnummer: WO 2018/107190

(56) Entgegenhaltungen:
- EP-A1- 0 578 133
- US-A- 2 813 509
- US-A1- 2011 253 054
- US-S1- D 583 111

## Beschreibung

Die Erfindung betrifft ein Set aus einer selbsthaftenden Matte, die zumindest teilweise aus einem elastisch verformbaren Material gebildet ist, zur lösbaren Fixierung eines Objektes und dem Objekt.

Aus dem Stand der Technik ist eine elastische, insbesondere selbsthaftende Matte bekannt. Liegt eine aus dem Stand der Technik bekannte selbsthaftende Matte flach auf einer glatten Oberfläche, beispielsweise auf einem Tisch, so haftet die Matte an der Oberfläche und kann lediglich von der Oberfläche gelöst werden, indem die Matte am Rand angehoben wird.

Die WO2016/010585 A1 offenbart eine einteilige Vorrichtung aus einer selbsthaftenden Matte und einer auf der Matte angeordneten Schale. Diese Vorrichtung dient vornehmlich dem Zweck, Kleinkindern ein selbstständiges Essen zu ermöglichen, ohne dass dabei die Schale umgestoßen wird.

Die US 2008/0216753 A1 offenbart eine zweiteilige Vorrichtung aus einer Fußmatte und einem darauf fixierbaren Napf. Der Napf kann durch Schweißen, Anschrauben, Festkleben etc. an der Fußmatte fixiert werden.

Die US 2,813,509 offenbart eine zweiteilige Vorrichtung aus einer Matte und einem auf dieser Matte fixierbaren Napf. Zur Fixierung ist vorgesehen, dass der Napf mit einem Vorsprung an einer Unterseite in eine Lasche an der Matte gesteckt wird.

Die in US 2008/0216753 A1 und US 2,813,509 offenbarten Vorrichtungen dienen vornehmlich dem Zweck der Haustierfütterung.

Ein Nachteil der beschriebenen einteiligen Vorrichtung aus einer selbsthaftenden Matte und einer Schale besteht in einer durch die elastische Natur der Matte bedingten sehr umständlichen Handhabung der Vorrichtung. Ein weiterer Nachteil besteht in einem durch die Größe der Matte und die Höhe der Schale bedingten hohen Platzbedarf, vor allem bei Aufbewahrung sowie Reinigung.

Die beschriebene zweiteilige Variante aus US 2008/0216753 A1 weist den Nachteil auf, dass diese nach einer festen Verbindung mittels Schweißen oder Anschrauben zu einer einteiligen Ausführungsvariante wird bzw. eine Trennung der beiden Elemente nicht zerstörungsfrei zu erlangen ist.

Die in US 2,813,509 beschriebene zweiteilige Variante weist den Nachteil auf, dass sich die beiden Elemente, nämlich Napf und Fußmatte, bei zu starker Beanspruchung, beispielsweise durch einen Hund, der mit seiner Schnauze seitlich gegen den Napf drückt, relativ leicht voneinander lösen können, was im Gebrauch nachteilig ist.

Eine weitere Matte ist aus dem Dokument US2011/0253054 bekannt.

Aufgabe der Erfindung ist es, eine nach dem Stand der Technik bekannte Matte weiterzuentwickeln, sodass der Platzbedarf, insbesondere bei Aufbewahrung sowie Reinigung, minimiert und gleichzeitig eine hochfeste Fixierung eines Objektes ermöglicht ist.

Die Aufgabe wird erfindungsgemäß durch die Merkmale des Anspruchs 1 gelöst.

Ferner ist die Aufnahmevorrichtung zur Aufnahme des Objektes bzw. eines Teils des Objektes ausgebildet, insbesondere einer Unterseite, sodass das dann befestigte Objekt nach oben hin fixiert ist.

Ein mit der erfindungsgemäßen Vorrichtung erzielter Vorteil ist insbesondere darin zu sehen, dass die Matte sowie ein darauf fixierbares Objekt getrennt voneinander aufbewahrt und gereinigt werden können, wodurch der Platzbedarf der Vorrichtung minimiert wird. Des Weiteren ist eine hochfeste Fixierung eines Objektes ermöglicht, die nach Gebrauch schnell und einfach lösbar ist. Die Matte ist selbsthaftend ausgebildet, sodass diese nur durch Anheben eines Randes der Matte von der Oberfläche lösbar ist. Wird jedoch versucht, die Matte mittig anzuheben, beispielsweise durch Ziehen am Objekt, welches an der Matte fixiert ist, so haftet die Matte fest an der Oberfläche, auf welcher sich die Matte befindet. Eine Selbsthaftung der Matte kann erreicht werden, wenn diese an deren Unterseite ausreichend glatt ausgebildet ist, sodass bei versuchtem Anheben der Matte an einer zum Rand beabstandeten Position ein Vakuum entsteht, das einem vollflächigen Lösen der Matte entgegenwirkt.

Die Ausnehmung kann, muss aber nicht durchgehend als Öffnung in der Matte ausgebildet sein. Möglich ist es, dass die Matte ein Loch sowie die Aufnahmevorrichtung aufweist, die Aufnahmevorrichtung kann aber auch in einer Vertiefung in der Matte positioniert sein. In letzterem Fall ist keine lochartige Öffnung gegeben.

Die Matte ist zumindest teilweise aus einem elastischen Material, insbesondere aus einem lebensmittelverträglichen Material, beispielsweise aus einem Silicon und/oder einem thermoplasischen Elastomer, gebildet, damit eine Lebensmittelverträglichkeit gewährleistet und die Matte spülmaschinenfest ist.

Des Weiteren kann bevorzugt vorgesehen sein, dass eine Unterseite der Matte glatt ausgebildet ist, um eine Selbsthaftung der Matte auf glatten Oberflächen zu gewährleisten. Darüber hinaus kann eine strukturierte Unterseite der Matte vorgesehen sein, um die Stärke der Selbsthaftung zu regulieren.

Es ist vorteilhaft, wenn die Unterseite der Matte vollflächig ausgebildet ist, um die Haftung der Matte auf glatten Oberflächen zu maximieren. Alternativ kann vorgesehen sein, dass die Unterseite der Matte strukturiert ausgebildet ist und beispielsweise an der Unterseite eine rückspringende Oberfläche aufweist und z. B. mit Einkerbungen ausgebildet ist. Dadurch lässt sich das Ausmaß bzw. Stärke der Selbsthaftung einstellen.

Möglich ist auch, dass ein äußerer Rand an einer Oberseite der Matte erhaben ausgebildet ist. Wird die Matte bei der Haustierfütterung bzw. beim Essen im Allgemeinen eingesetzt, so kann der erhabene Rand als Barriere für Schmutz dienen.

Ein äußerer Rand der Matte kann umlaufend oder zumindest abschnittsweise zu einem Innenbereich der Matte und zur Unterseite der Matte hin abgeschrägt ausgebildet sein. Durch einen im Querschnitt zum Rand schräg nach unten verlaufenden Rand kann die Matte an beliebigen Positionen gut mit einem oder mehreren Fingern angegriffen und trotz der Haftung der Matte leicht gelöst werden. Bevorzugt ist ein schräger Rand über weite Strecken des Verlaufes des Randes, bevorzugt über den gesamten Rand, damit keine Überlegung erforderlich ist, wo die Matte anzuheben ist. Es ist aber grundsätzlich auch möglich, lediglich einzelne Teilabschnitte des Randes mit einer entsprechenden Schrägstellung zu versehen oder einzelne Rücksprünge im Randbereich vorzusehen, welche ein Lösen der Matte von einem Untergrund erleichtern.

Die Aufnahmevorrichtung weist einen Drehverschluss mit einer Arretierung auf, um eine einfache und hochfeste Fixierung eines Objektes an der Matte zu gewährleisten. Als Verschluss, der besonders einfach in der Handhabung ist und hochfest fixierbar ist, kann ein Bajonettverschluss vorgesehen sein.

Von Vorteil ist es, dass die Aufnahmevorrichtung zumindest teilweise aus einem Thermoplast ausgebildet ist, damit eine Stabilität des Drehverschlusses sowie eine Langlebigkeit desselben gegeben ist.

Um ein Ansammeln von Schmutz und Bakterien zu verhindern, kann die Aufnahmevorrichtung an einem Rand der Ausnahme positioniert sein. Besonders vorteilhaft ist es, wenn die Aufnahmevorrichtung spaltenfrei mit der Matte abschließt.

Von Vorteil ist es, dass das Objekt, insbesondere ein Napf oder eine Schale, in der Aufnahmevorrichtung lösbar fixierbar ist.

Um eine schnelle Fixierung des Objektes an bzw. auf der Matte zu ermöglichen, ist es vorteilhaft, dass das Objekt durch Drehen in der Aufnahmevorrichtung fixierbar ist.

Erfindungsgemäß ist das Objekt zumindest teilweise aus einem Thermoplast ausgebildet, damit eine Lebensmittelverträglichkeit gewährleistet ist und das Objekt spülmaschinenfest ist. Ein weiterer Vorteil ist darin zu sehen, dass das Objekt aus Thermoplast kostengünstig produziert werden kann.

Von Vorteil ist es, wenn das Objekt an einer Unterseite ein Anschlussstück für die Aufnahmevorrichtung aufweist, damit das Objekt in der Aufnahmevorrichtung fixiert werden kann. Dieses Anschlussstück kann ein Gegenstück zu einem Bajonettverschluss in der Matte sein und in diesen form- und/oder kraftschlüssig eingreifen.

Um eine einfache Handhabung zu ermöglichen, ist erfindungsgemäß vorgesehen, dass das Objekt mindestens einen Griff aufweist.

Zur weiteren Verbesserung der Handhabung kann vorgesehen sein, dass der zumindest eine Griff zumindest teilweise mit Silicon beschichtet ist.

Zweckmäßig ist es, wenn eine Zwischenlage vorgesehen ist, welche im Wesentlichen zwischen der Matte und dem Objekt anordenbar ausgebildet ist. Dadurch kann eine Fläche, welche gegen Verschmutzung geschützt ist, kostengünstig vergrößert werden, da eine großflächige Zwischenlage eingefügt sein kann und die Matte selbst nicht vergrößert ausgebildet sein muss. Die Zwischenlage kann zwischen der Matte und dem Objekt eingefügt und somit mit dem Set verbunden sein. Hierbei kann die Zwischenlage beispielsweise als Platzmatte oder als Latz ausgebildet sein. Diese Zwischenlage lässt sich gegebenenfalls auch durch ein Zusammenwirken mit der Matte und dem Objekt zwischen diesen positionsstabil fixieren.

Es ist weiter vorteilhaft, wenn die Zwischenlage ein Loch aufweist, durch welches ein Teilbereich des Objektes, insbesondere das Anschlussstück, führbar ist. Dadurch kann das Objekt in gewohnter Art und Weise mit der Matte verbunden werden, wobei ein Rand des Lochs das Anschlussstück und/oder die Aufnahmevorrichtung umschließt. Eine Verbindung des Objektes mit der Matte erfolgt durch das Loch der Zwischenlage hindurch. Somit ist die Zwischenlage gegen Verrutschen gesichert. Damit das Anschlussstück und/oder die Aufnahme durch das Loch führbar sind, ist es günstig, wenn ein Durchmesser des Lochs der Zwischenlage größer ist als der Durchmesser des Anschlussstückes und/oder der Aufnahme. Ferner ist es vorteilhaft, wenn der Durchmesser des Lochs kleiner ist als der maximale Durchmesser des Objekts. Dadurch ist verhindert, dass die Zwischenlage nach oben hin über das Objekt ziehbar und in der Folge abnehmbar bzw. vom Set trennbar ist, ohne zuerst das Objekt von der Matte zu lösen.

Ein weiterer Vorteil ergibt sich, wenn die Zwischenlage als Latz mit einem öffenbaren Halsausschnitt ausgebildet ist. Dadurch kann die Zwischenlage einerseits fest mit dem Set verbunden sein und andererseits beispielsweise um den Hals eines Kindes gelegt werden. Der Halsausschnitt kann insbesondere leicht öffenbar ausgebildet sein. Hierfür können zwei Seiten des Halsausschnittes mit einer Verbindung, wie beispielsweise mit einem Clipverschluss, Magnetverschluss, einem oder mehreren Druckknöpfen oder dergleichen schließbar sein. Hierbei kann vorgesehen sein, dass bereits geringe Zugkräfte diese Verbindung lösen. Es ist insbesondere vorteilhaft wenn die Verbindung mit einer Zugkraft von mehr als 100 N, vorzugsweise mehr als 75 N, besonders bevorzugt mit einer Zugkraft von zumindest 25 N, lösbar ist.
Fig. 1 zeigt eine Draufsicht auf eine erfindungsgemäße Matte;
Fig. 2 zeigt eine Seitenansicht eines Napfes;
Fig. 3 zeigt ein Set aus Matte und Objekt in teilweise querschnittlicher Darstellung;
Fig. 4 zeigt eine Draufsicht auf eine Platzmatte;
Fig. 5 zeigt ein Set aus Matte, Objekt und Platzmatte in teilweise querschnittlicher Darstellung;
Fig. 6 zeigt eine Draufsicht auf einen Latz.

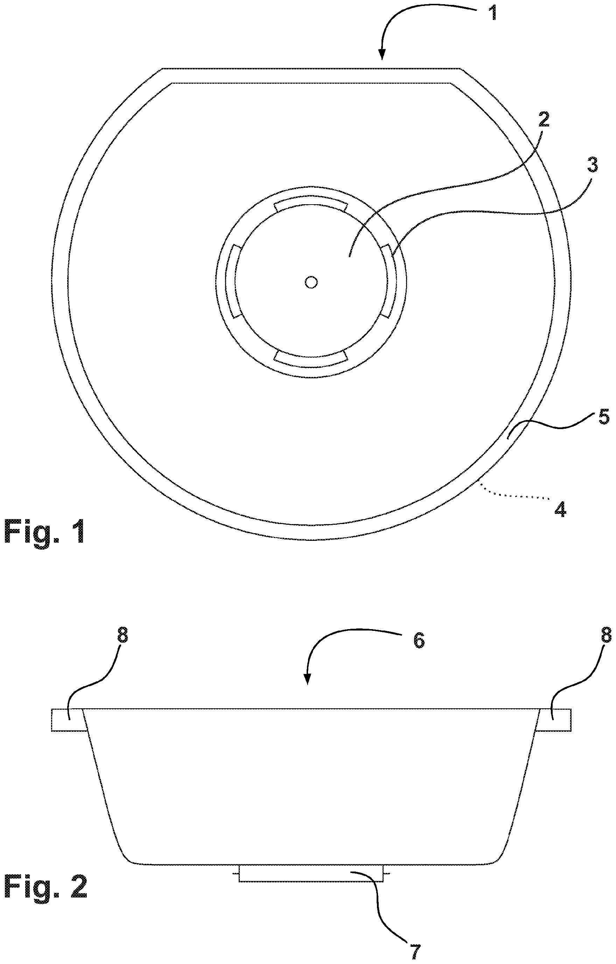

In Fig. 1 ist eine Matte 1 in Draufsicht dargestellt. Die Matte 1 ist annähernd rund mit einer abgeschnittenen Seite und aus einem elastischen Material, insbesondere Silicon, ausgebildet. Alternativ kann vorgesehen sein, dass die Matte 1 aus einem thermoplastischen Elastomer ausgebildet ist, um eine kostengünstigere Produktion zu ermöglichen. Mit der abgeschnittenen Seite kann die Matte 1 abschließend an einer Kante bzw. Wand positioniert werden. Darüber hinaus können an der abgeschnittenen Seite beispielsweise zwei Matten 1 aneinandergereiht werden. Die Matte 1 kann aber auch eine beliebige andere Form aufweisen und z. B. rechteckig ausgebildet sein. Ferner weist die Matte 1 im Zentrum eine kreisförmige Ausnehmung 2 auf. In der Ausnehmung 2 ist eine Aufnahmevorrichtung 3, insbesondere ein Bajonettverschluss, positioniert. Alternativ kann in der Ausnehmung 2 ein beliebiger Drehverschluss, ein Gewinde, ein Klett-, Schnapp- oder Klickverschluss bzw. eine Steckverbindung positioniert sein. Darüber hinaus kann statt eines Drehverschlusses mindestens ein Magnet in die Matte 1 eingearbeitet sein, der eine Fixierung mittels objektseitigem, gegenpoligen Magnet oder Magneten ermöglicht. Optional kann auch ein Klettverschluss als Aufnahmevorrichtung 3 vorgesehen sein.

Die Matte 1 ist durch einen erhaben äußeren Rand 5 begrenzt. An diesem Rand 5 kann ein Lösegriff vorgesehen sein, der ein Ablösen der Matte 1 von der glatten Oberfläche erleichtert. Weiter weist die erfindungsgemäße Matte 1 eine in Fig. 1 nicht dargestellte, glatte, vollflächige Unterseite 4 auf.

Für ein leichtes Lösen der Matte 1 von einem Untergrund kann vorgesehen sein, dass der äußere Rand 5 über dessen gesamten Verlauf oder zumindest in Teilabschnitten abgeschrägt ist, also von oben nach unten rückspringt. Durch eine solche im Querschnitt zum äußeren Rand 5 rückspringende Ausbildung desselben lässt sich die Matte 1 auf einfache Weise anheben.

In Fig. 2 ist ein Objekt 6, insbesondere ein Napf, in Seitenansicht dargestellt. Das Objekt 6 weist an einer Unterseite 4 ein Anschlussstück 7 für die in Fig. 2 nicht dargestellte Aufnahmevorrichtung 3 auf. Dieses Anschlussstück 7 kann beispielsweise das Gegenstück zu einem Bajonettverschluss, ein Gewinde, ein Klettverschluss, eine Steckverbindung oder ein zum Magnet in der Matte 1 gegenpoliger Magnet sein. Griffe 8 an der Seite des Objektes 6 dienen zur besseren Handhabung des Objektes 6.

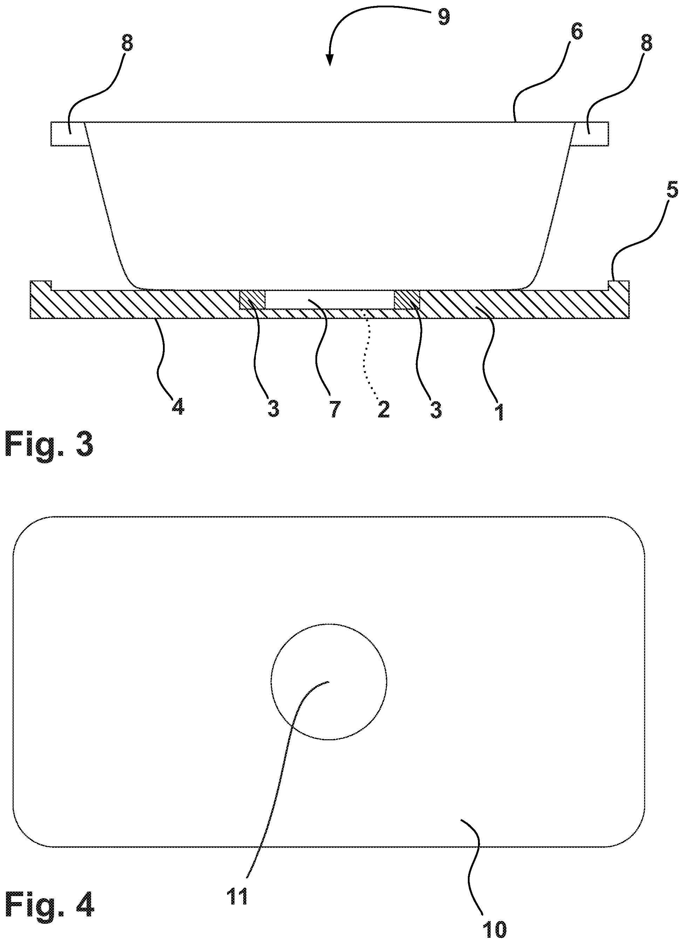

In Fig. 3 ist ein Set 9 aus Matte 1 und Objekt 6 dargestellt. Das Objekt 6 ist mittels Anschlussstück 7 mit der Aufnahmevorrichtung 3 verbunden. Ein erfindungsgemäßer Vorteil der Vorrichtung liegt darin, dass ein Objekt 6, das an einer selbsthaftenden Matte 1 fixiert ist, weder bewegt noch umgestoßen werden kann.

Darüber hinaus bietet eine Aufteilung in Matte 1 und ein darauf fixierbares Objekt 6 die Möglichkeit, die Elemente modular und auf den Zweck ausgerichtet zu kombinieren. So können Schalen oder Näpfe unterschiedlicher Größe und/oder Beschaffenheit eingesetzt werden. Darüber hinaus wird durch die modulare Ausbildung der Vorrichtung das Einsatzgebiet der Vorrichtung erweitert. Beispielsweise kann eine Halterung für ein Mobiltelefon und/oder ein Navigationsgerät zur selbsthaftenden Montage am Armaturenbrett eines Fahrzeuges, in der Aufnahmevorrichtung 3 fixiert werden.

In einem Verfahren zur Herstellung einer erfindungsgemäßen Matte 1 wird ein aus einem Thermoplast gefertigte Aufnahmevorrichtung 3 vorgelegt und mit einem elastischen Material, insbesondere Silicon in einem Spritzgussverfahren umgossen. Eine solche Vorgangsweise ist zweckmäßig, um einen möglichst spaltenfreien Übergang zwischen Matte 1 und Aufnahmevorrichtung 3 zu gewährleisten. Darüber hinaus wird dadurch eine innige, stabile Verbindung der Aufnahmevorrichtung 3 mit dem umgebenden Silicon erzielt.

In Fig. 4 ist eine Platzmatte 10 dargestellt, welche ein durchgehendes Loch 11 aufweist. Das Loch 11 ist hierbei in der Mitte der Platzmatte 10 angeordnet. Grundsätzlich kann das Loch 11 allerdings beliebig in der Matte 1 positioniert sein. Die Platzmatte 10 kann bei dem Set 9 als Zwischenlage zwischen der Matte 1 und dem Objekt 6, wie beispielsweise einer Schale, angeordnet sein.

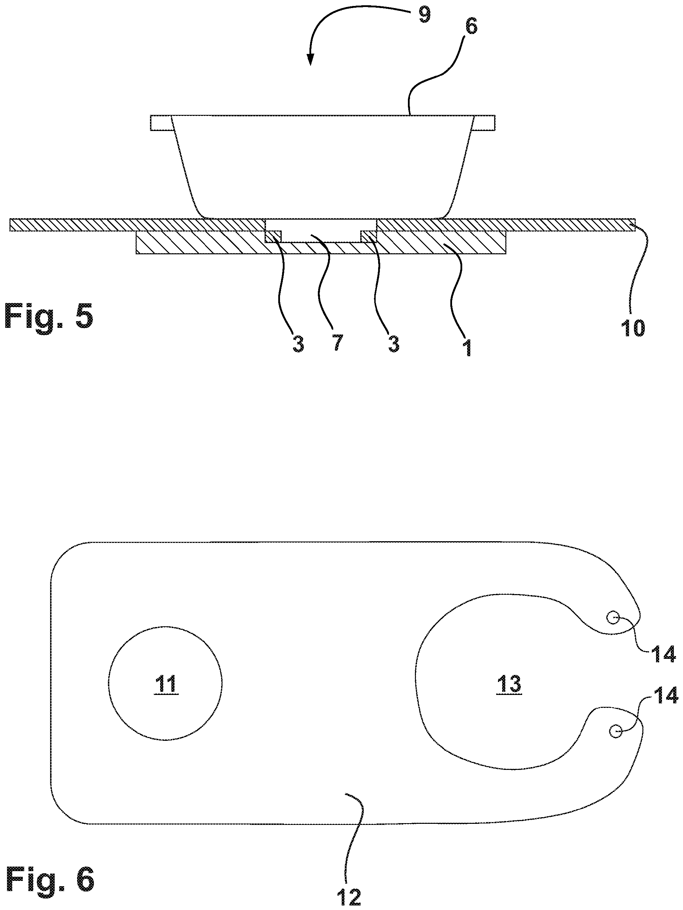

In Fig. 5 ist ein Set 9 umfassend eine Matte 1, ein Objekt 6 und eine Zwischenlage dargestellt. Die Zwischenlage kann hierbei als Platzmatte 10 ausgebildet sein. Das Objekt 6 ist mittels Anschlussstück 7 mit der Aufnahmevorrichtung 3 und dadurch mit der Matte 1 verbunden. Hierfür ist das Anschlussstück 7 durch das Loch 11 in der Platzmatte 10 geführt. Die Platzmatte 10 bzw. die Zwischenlage kann im Wesentlichen aus einem verformbaren bzw. biegsamen und/oder elastischen Material ausgebildet sein oder ein solches Material umfassen.

Die in Fig. 5 dargestellte Zwischenlage kann alternativ als Latz 12 ausgebildet sein. Ein derartiger Latz 12 bzw. ein Lätzchen ist in Fig. 6 in einer Draufsicht dargestellt, wobei im Wesentlichen eine Platzmatte 10 zum Latz 12 verlängert ist. Der Latz 12 weist ebenso ein Loch 11 zur Fixierung an dem Set 9 auf. An einem Ende weist der Latz 12 überdies einen öffenbaren Halsausschnitt 13 auf, welcher durch Verbindungselemente, wie beispielsweise eine Druckknopfverbindung 14, einen Clipverschluss, Magnete, oder dergleichen, geschlossen werden kann. Der Halsausschnitt 13 umfasst im Wesentlichen zwei Arme, welche über die Verbindungselemente verbindbar sind. Als Alternative zum Halsausschnitt können ebenso zwei Stoffbändchen vorgesehen sein, welche um einen Hals gebunden werden können. Auch andere Varianten zur Befestigung um den Hals eines Kleinkindes sind möglich.

Ein derartiges Set 9 kann beispielsweise zur Haustierfütterung genutzt werden, da beispielsweise eine Schale durch die selbsthaftende Matte 1 an einem Boden fixiert werden kann und somit gegen ein Verschieben bzw. Umkippen durch ein Haustier gesichert ist. Falls das Haustier dennoch kleckert, so ist der Boden durch die Matte 1 geschützt.

Darüber hinaus kann ein derartiges Set 9 beispielsweise als Müsli- oder Breischüssel für Kleinkinder eingesetzt werden. Hierbei wird eine Schüssel durch die selbsthaftende Matte 1 an einer Tischoberfläche fixiert. Dem Kleinkind ist es so ermöglicht, selbstständig zu essen, ohne dass die Schüssel verschoben, umgekippt oder zu Boden geworfen werden kann. Um die Tischoberfläche großflächiger abzudecken, kann beispielsweise die Zwischenlage zwischen der Matte 1 und der Schüssel eingefügt werden. Hierfür kann etwa die Platzmatte 10 vorgesehen sein. Um zusätzlich einen Bereich über die Tischkante hinaus abzudecken, können bei Verwendung eines erfindungsgemäßen Latzes 12 sowohl die Vorteile einer Platzmatte 10 als auch jene eines Lätzchens ausgenutzt werden.

## Patentansprüche

1. Set (9) aus einer Matte (1) zur lösbaren Fixierung eines Objektes (6)wie einer Schale und dem Objekt (6), wobei die Matte (1) mindestens eine als Vertiefung in der Matte (1) ausgebildete Ausnehmung (2) aufweist, wobei in der Ausnehmung (2) der Matte (1) eine Aufnahmevorrichtung (3) für das Objekt (6) positioniert ist, die zumindest teilweise aus einem festeren Material als die Matte (1) besteht, und wobei die Aufnahmevorrichtung (3) einen Drehverschluss mit einer Arretierung zur Fixierung des Objektes (6) durch Drehen aufweist, **dadurch gekennzeichnet,**
**dass** die Matte selbsthaftend ist und dass die Matte zumindest teilweise aus einem elastisch verformbaren Material gebildet ist, und dass die Aufnahmevorrichtung
aus einem Thermoplast ausgebildet ist, der mit einem elastischen Material in einem Spritzgussverfahren umgossen ist.

2. Set (9) nach Anspruch 1, **dadurch gekennzeichnet, dass** die Matte (1) zumindest teilweise aus einem elastischen Material, insbesondere aus einem lebensmittelverträglichen Material, beispielsweise aus einem Silicon und/oder einem thermoplastischen Elastomer, gebildet ist.

3. Set (9) nach Anspruch 1 oder 2, **dadurch gekennzeichnet, dass** eine Unterseite (4) der Matte (1) glatt und vorzugsweise vollflächig ausgebildet ist.

4. Set (9) nach einem der Ansprüche 1 bis 3, **dadurch gekennzeichnet, dass** ein äußerer Rand (5) an einer Oberseite der Matte (1) erhaben ausgebildet ist.

5. Set (9) nach einem der Ansprüche 1 bis 4, **dadurch gekennzeichnet, dass** ein äußerer Rand (5) der Matte (1) umlaufend oder zumindest abschnittsweise zu einem Innenbereich der Matte (1) und zur Unterseite der Matte (1) hin abgeschrägt ausgebildet ist.

6. Set (9) nach einem der Ansprüche 1 bis 5, **dadurch gekennzeichnet, dass** die Aufnahmevorrichtung (3) an einem Rand (5) der Ausnehmung (2) positioniert ist.

7. Set (9) nach Anspruch 1, **dadurch gekennzeichnet, dass** das Objekt (6) an einer Unterseite (4) ein Anschlussstück (7) für die Aufnahmevorrichtung (3) aufweist.

8. Set (9) nach einem der Ansprüche 1 bis 7, **dadurch gekennzeichnet, dass** das Objekt (6) mindestens einen Griff (8) aufweist, wobei vorzugsweise der zumindest eine Griff (8) zumindest teilweise mit Silicon beschichtet ist.

9. Set (9) nach einem der Ansprüche 1 bis 8, **dadurch gekennzeichnet, dass** eine Zwischenlage vorgesehen ist, welche im Wesentlichen zwischen der Matte (1) und dem Objekt (6) anordenbar ausgebildet ist.

10. Set (9) nach Anspruch 9, **dadurch gekennzeichnet, dass** die Zwischenlage ein Loch (11) aufweist, durch welches ein Teilbereich des Objektes (6), insbesondere das Anschlussstück (7), führbar ist.

11. Set (9) nach Anspruch 9 oder 10, **dadurch gekennzeichnet, dass** die Zwischenlage als Latz (12) mit einem öffenbaren Halsausschnitt (13) ausgebildet ist.

## Claims

1. A set (9) comprised of a mat (1) for detachably fixing an object (6) like a shell and the object (6), wherein the mat (1) has at least one recess (2) designed as a depression in the mat (1), wherein a receiving device (3) for the object (6) is positioned in the recess (2) of the mat (1), and consists at least partially of a stronger material than the mat (1), and wherein the receiving device (3) has a screw cap with a lock for fixing the object (6) through rotation, **characterized in that** the mat is self-adhesive, and that the mat is comprised at least partially of an elastically deformable material, and that the receiving device is comprised of a thermoplastic encapsulated with an elastic material in an injection molding process.

2. The set (9) according to claim 1, **characterized in that** the mat (1) is comprised at least partially of an elastic material, in particular of a food-compatible material, for example a silicone and/or a thermoplastic elastomer.

3. The set (9) according to claim 1 or 2, **characterized in that** a lower side (4) of the mat (1) is smooth, and preferably fully formed.

4. The set (9) according to one of claims 1 to 3, **characterized in that** an outer edge (5) is raised on an upper side of the mat (1).

5. The set (9) according to one of claims 1 to 4, **characterized in that** an outer edge (5) is beveled all around or at least sectionally toward an inner area of the mat (1) and toward the lower side of the mat (1).

6. The set (9) according to one of claims 1 to 5, **characterized in that** the receiving device (3) is positioned on an edge (5) of the recess (2).

7. The set (9) according to claim 1, **characterized in that** the object (6) has a connecting piece (7) for the receiving device (3) on a lower side (4).

8. The set (9) according to one of claims 1 to 7, **characterized in that** the object (6) has at least one handle (8), wherein the at least one handle (8) is preferably coated at least partially with silicone.

9. The set (9) according to one of claims 1 to 8, **characterized in that** an intermediate layer is provided, which can essentially be arranged between the mat (1) and the object (6).

10. The set (9) according to claim 9, **characterized in that** the intermediate layer has a hole (11), through which a partial area of the object (6), in particular the connecting piece (7), can be guided.

11. The set (9) according to claim 9 or 10, **characterized in that** the intermediate layer is designed as a bib (12) with an openable neck section (13).

## Revendications

1. Kit (9) constitué d'une natte (1), destinée à la fixation amovible d'un objet (6) comme une coque et l'objet (6), la natte (1) comportant un évidement (2) conçu sous la forme d'un creux dans la natte (1), dans l'évidement (2) de la natte (1) étant positionné un dispositif récepteur (3) pour l'objet (6), qui consiste au moins partiellement en une matière plus solide que la natte (1) et le dispositif récepteur (3) comportant une fermeture rotative pourvue d'un blocage pour la fixation par rotation de l'objet (6), **caractérisé en ce que** la natte est auto-adhérente et **en ce que** la natte est constituée au moins en partie en une matière élastiquement déformable et **en ce que** le dispositif récepteur est conçu en une matière thermoplastique, qui par un procédé de moulage par injection est enrobée d'une matière élastique.

2. Kit (9) selon la revendication 1, **caractérisé en ce que** la natte (1) est constituée au moins partiellement en une matière élastique, notamment en une matière compatible avec les produits alimentaires, par exemple en un silicone et / ou en un élastomère thermoplastique.

3. Kit (9) selon la revendication 1 ou 2, **caractérisé en ce qu'**une face inférieure (4) de la natte (1) est lisse et conçue de préférence à pleine surface.

4. Kit (9) selon l'une quelconque des revendications 1 à 3, **caractérisé en ce qu'**un bord extérieur (5) est conçu en relief sur une face supérieure de la natte (1)

5. Kit (9) selon l'une quelconque des revendications 1 à 4, **caractérisé en ce que** qu'un bord (5) extérieur de la natte (1) est conçu de forme périphérique ou au moins chanfreiné par endroits par rapport à une zone intérieure de la natte (1) et à la face inférieure de la natte (1).

6. Kit (9) selon l'une quelconque des revendications 1 à 5, **caractérisé en ce que** le dispositif récepteur (3) est positionné sur un bord (5) de l'évidement (2).

7. Kit (9) selon la revendication 1, **caractérisé en ce que** l'objet (6) comporte sur une face inférieure (4) une pièce de raccordement (7) pour le dispositif récepteur (3) .

8. Kit (9) selon l'une quelconque des revendications 1 à 7, **caractérisé en ce que** l'objet (6) comporte au moins une poignée (8), de préférence l'au moins une poignée (8) étant revêtue au moins partiellement de silicone.

9. Kit (9) selon l'une quelconque des revendications 1 à 8, **caractérisé en ce qu'**il est prévu une couche intermédiaire, laquelle est conçue de sorte à pouvoir se placer sensiblement entre la natte (1) et l'objet (6) .

10. Kit (9) selon la revendication 9, **caractérisé en ce que** la couche intermédiaire comporte un trou (11), à travers lequel une zone partielle de l'objet (6), notamment la pièce de raccordement (7) peut être conduite.

11. Kit (9) selon la revendication 9 ou 10, **caractérisé en ce que** la couche intermédiaire est conçue sous la forme d'un plastron (12) doté d'une encolure (13) qui peut s'ouvrir.
